# EUROPEAN PATENT APPLICATION

(11) **EP 4 328 357 A1**
(43) Date of publication of application: **28.02.2024**
(21) Application number: 21937971.6
(22) Date of filing: 09.12.2021
(51) Int. Cl.: C25B 9/05, C01B 3/00, C25B 1/02, C25B 9/00, C25B 9/23, C25B 15/00, C25B 15/021, C25B 15/023

(54) **COMPRESSION APPARATUS AND METHOD FOR CONTROLLING COMPRESSION APPARATUS**

(30) Priority: 20.04.2021 JP 2021070901
(71) Applicant: Panasonic Intellectual Property Management Co., Ltd., Kadoma-shi, Osaka 571-0057 (JP)
(72) Inventor: KAKUWA Takashi, Kadoma-shi, Osaka 571-0057 (JP); SAKAI Osamu, Kadoma-shi, Osaka 571-0057 (JP); KITA Hiromi, Kadoma-shi, Osaka 571-0057 (JP)
(74) Representative: Grünecker Patent- und Rechtsanwälte PartG mbB
(86) International application number: PCT/JP2021/045239
(87) International publication number: WO 2022/224481

(57) **Abstract**

A compressor device includes: a compressor that causes, by applying a voltage between an anode and a cathode, hydrogen in an anode gas to move through an electrolyte membrane to the cathode and compresses the hydrogen; a regulator that regulates the temperature of the anode gas in the compressor; and a controller that controls the regulator to regulate the temperature of the anode gas at an outlet of the anode based on at least one of the pressure of a cathode gas and a current flowing between the anode and the cathode under the application of the voltage.

## Description

### Technical Field

The present disclosure relates to a compressor device and a method for controlling the compressor device.

### Background Art

In recent years, carbon-free fuel cell vehicles that run by driving a motor using electric power generated by the fuel cell are receiving attention as one of the measures against global warming. However, a problem in achieving widespread use of the fuel cell vehicles is how to provide an infrastructure for supplying hydrogen used as fuel and how to build hydrogen stations as many as possible over a wide area in the country. In particular, hydrogen purifying compressor devices are large and require a huge installation cost, and this impedes nation-wide installation of hydrogen stations.

In the coming carbon-free hydrogen society, there is a need not only for development of a technique for producing hydrogen but also for development of a technique for storing hydrogen at high density and allowing a small volume of hydrogen to be transported or utilized at low cost. In particular, to supply hydrogen to the fuel supply infrastructure stably, various proposals for obtaining highly purified hydrogen gas and boosting the pressure of the hydrogen gas have been made.

Generally, a high-pressure hydrogen gas compressed to several tens of MPa is used as a fuel gas of fuel cell vehicles etc. The high-pressure hydrogen gas can be obtained, for example, by producing a low-pressure hydrogen gas in a water electrolyzer through an electrochemical reaction and then compressing the hydrogen to high pressure using a mechanical compressor device.

In view of the above, PTL 1 and PTL 2 propose electrochemical compressor devices that can purify and compress hydrogen in a cathode by supplying a low-pressure hydrogen-containing gas composed mainly of hydrogen to an anode and causing only hydrogen to pass through an electrolyte membrane.

In this method, the electrolyte membrane is used in order to compress the low-pressure hydrogen-containing gas, and electrode catalyst layers used as the anode and the cathode are disposed on the opposite sides of the electrolyte membrane. An anode feeder and a cathode feeder are disposed on the respective electrode catalyst layers. A layered body including the anode feeder, the cathode feeder, and the electrolyte membrane is held between an anode separator and a cathode separator to thereby form an electrochemical cell. A flow passage for supplying the low-pressure hydrogen-containing gas to the anode from the outside and a flow passage for leading an excess of the hydrogen-containing gas from the anode to the outside are provided in the anode separator. A flow passage for leading the high-pressure cathode gas (hydrogen gas) compressed in the cathode to the outside is provided in the cathode separator.

PTL 1 proposes that, when the temperature of the electrochemical cell increases during compression of the hydrogen-containing gas in the cell because of the heat of condensation of water vapor or heat generated by IR loss caused by the resistance of the electrolyte membrane, the dew point of the hydrogen-containing gas is increased so that the electrolyte membrane can be humidified appropriately at startup of the system.

PTL 2 proposes that, during the hydrogen compression operation of the compressor device, the relative humidity of the hydrogen-containing gas in the anode or the cathode gas in the cathode is appropriately increased. Specifically, in the proposed control, the relative humidity of any of the above gases is increased intermittently or based on a signal indicating an increase in voltage etc. during the hydrogen compression operation such that the reduction in the content of water in the electrolyte membrane caused by the flow of water present inside the electrochemical cell to the outside can be mitigated.

### Citation List

### Patent Literature

PTL 1: Japanese Patent No. 6765060
PTL 2: Japanese Unexamined Patent Application Publication No. 2019-210205

### Summary of Invention

### Technical Problem

It is an object of the present disclosure to provide a compressor device in which, for example, the relative humidity of an anode gas can be controlled more appropriately than in the conventional techniques and to provide a method for controlling the compressor device.

### Solution to Problem

A compressor device in one aspect of the present disclosure includes: a compressor that causes, by applying a voltage between an anode and a cathode, hydrogen in an anode gas to move through an electrolyte membrane to the cathode and compresses the hydrogen; a regulator that regulates the temperature of the anode gas in the compressor; and a controller that controls the regulator to regulate the temperature of the anode gas at an outlet of the anode based on at least one of the pressure of a cathode gas and a current flowing between the anode and the cathode under the application of the voltage.

A method for controlling a compressor device in another aspect of the present disclosure includes the step of causing, by applying a voltage between an anode and a cathode, hydrogen in an anode gas to move through an electrolyte membrane to the cathode and compressing the hydrogen, wherein, in the step of applying, the temperature of the anode gas at an outlet of the anode is adjusted based on at least one of the pressure of a cathode gas and a current flowing between the anode and the cathode under the application of the voltage.

### Advantageous Effects of Invention

In the compressor device and the method in the above aspects of the present disclosure, the relative humidity of the anode gas can be controlled more appropriately than in the conventional techniques.

### Brief Description of Drawings

[Fig. 1] Fig. 1 is an illustration showing an example of a compressor device in a first embodiment.
[Fig. 2] Fig. 2 is an illustration showing an example of the flow of hydrogen and water (water vapor) in a hydrogen-containing gas in an electrochemical cell.
[Fig. 3] Fig. 3 is an illustration showing an example of the flow of a heat medium and the flow of the hydrogen-containing gas in an electrochemical cell of the compressor device in a First Example of the first embodiment.
[Fig. 4] Fig. 4 is a graph showing a Control Example of the compressor device in the First Example of the first embodiment.
[Fig. 5A] Fig. 5A is a flowchart in a First Control Example of the compressor device in the First Example of the first embodiment.
[Fig. 5B] Fig. 5B is a flowchart in a Second Control Example of the compressor device in the First Example of the first embodiment.
[Fig. 6A] Fig. 6A is a flowchart in a First Control Example of the compressor device in a Second Example of the first embodiment.
[Fig. 6B] Fig. 6B is a flowchart in a Second Control Example of the compressor device in the Second Example of the first embodiment.

### Description of Embodiments

In an electrochemical compressor using an electrolyte membrane, hydrogen (H²) in an anode is converted to protons. Then the protons (H⁺) are caused to move to a cathode and reconverted to hydrogen (H²) in the cathode, and a cathode gas is thereby increased in pressure. In this case, for example, when the relative humidity of an anode gas in the anode of the compressor decreases, the electrolyte membrane may dry up. The drying up causes a reduction in the proton conductivity of the electrolyte membrane, and this may lead to an increase in the diffusion overpotential of the electrochemical cell. In contrast, when the relative humidity of the anode gas in the anode of the compressor increases, the amount of condensed water in the anode increases, and flooding occurs in the anode. This may lead to an increase in the diffusion overpotential of the electrochemical cell.

In view of the above, the inventors have conducted extensive experiments in order to reduce the possibility of the occurrence of drying up of the electrolyte membrane and flooding in the anode and arrived at the following aspects of the present disclosure. The details of the experiments and the details of the results will be described later.

Accordingly, a compressor device in a first aspect of the present disclosure includes: a compressor that causes, by applying a voltage between an anode and a cathode, hydrogen in an anode gas to move through an electrolyte membrane to the cathode and compresses the hydrogen; a regulator that regulates the temperature of the anode gas in the compressor; and a controller that controls the regulator to regulate the temperature of the anode gas at an outlet of the anode based on at least one of the pressure of a cathode gas and a current flowing between the anode and the cathode under the application of the voltage.

In the thus-configured compressor device in the present aspect, the relative humidity of the anode gas can be adjusted more appropriately than in the conventional techniques. Specifically, the distribution of water in the anode depends on the current flowing between the anode and the cathode, the pressure of the cathode gas present in the cathode, etc. When the temperature of the anode gas at the outlet of the anode is not regulated based on the current flowing between the anode and the cathode and the pressure of the cathode gas, it is sometimes difficult to appropriately adjust the relative humidity of the hydrogen-containing gas at the outlet of the anode.

However, in the compressor device in the present aspect, since the regulator is controlled based on at least one of the current flowing between the anode and the cathode and the pressure of the cathode gas as described above, the relative humidity of the anode gas at the outlet of the anode can be adjusted more appropriately than when the above control is not performed. Therefore, in the compressor device in the present aspect, the efficiency of the hydrogen compression operation of the compressor can be maintained at a high level.

According to a second aspect of the present disclosure, in the compressor device in the first aspect, when the current flowing between the anode and the cathode under the application of the voltage increases, the controller may control the regulator to increase the temperature of the anode gas at the outlet of the anode.

As the current flowing between the anode and the cathode increases, the pressure of the cathode gas increases, so that the amount of water migrating from the cathode to the anode due to the pressure difference between the anode and the cathode increases. Then the relative humidity of the hydrogen-containing gas at the outlet of the anode increases. This may cause flooding to occur in the anode.

However, in the compressor device in the present aspect, as the current flowing between the anode and the cathode increases, the temperature of the anode gas at the outlet of the anode is increased, so that the possibility of the occurrence of flooding in the anode can be reduced.

According to a third aspect of the present disclosure, in the compressor device in the first or second aspect, when the pressure of the cathode gas increases, the controller may control the regulator to increase the temperature of the anode gas at the outlet of the anode.

As the pressure of the cathode gas increases, the amount of water migrating from the cathode to the anode due to the pressure difference between the anode and the cathode increases. Then the relative humidity of the hydrogen-containing gas at the outlet of the anode increases. In this case, flooding may occur in the anode.

However, in the compressor device in the present aspect, when the pressure of the cathode gas increases, the temperature of the anode gas at the outlet of the anode is increased, so that the possibility of the occurrence of flooding in the anode can be reduced.

According to a fourth aspect of the present disclosure, in the compressor device in any one of the first to third aspects, when the current flowing between the anode and the cathode under the application of the voltage decreases, the controller may control the regulator to reduce the temperature of the anode gas at the outlet of the anode.

As the current flowing between the anode and the cathode decreases, the pressure of the cathode gas decreases, so that the amount of water migrating from the cathode to the anode due to the pressure difference between the anode and the cathode decreases. In this case, when the temperature of the anode gas at the outlet of the anode remains high, drying up of the electrolyte membrane may occur.

However, in the compressor device in the present aspect, when the current flowing between the anode and the cathode decreases, the temperature of the anode gas at the outlet of the anode is reduced, so that the possibility of drying up of the electrolyte membrane can be reduced.

According to a fifth aspect of the present disclosure, in the compressor device in any one of the first to fourth aspects, when the pressure of the cathode gas decreases, the controller may control the regulator to reduce the temperature of the anode gas at the outlet of the anode.

As the pressure of the cathode gas decreases, the amount of water migrating from the cathode to the anode due to the pressure difference between the anode and the cathode decreases. In this case, when the temperature of the anode gas at the outlet of the anode remains high, drying up of the electrolyte membrane may occur.

However, in the compressor device in the present aspect, when the pressure of the cathode gas decreases, the temperature of the anode gas at the outlet of the anode is reduced, so that the possibility of drying up of the electrolyte membrane can be reduced.

According to a sixth aspect of the present disclosure, in the compressor device in the second or third aspect, the controller may increase an upper limit of the temperature of the anode gas at the outlet of the anode.

In the compressor device in any of the second and third aspects, the amount of water migrating from the cathode to the anode due to the pressure difference between the anode and the cathode tends to increase.

Therefore, in the compressor device in the present aspect, as the current flowing between the anode and the cathode increases or as the pressure of the cathode gas increases, the upper limit of the temperature of the anode gas at the outlet of the anode is increased, and therefore the temperature of the anode gas at the outlet of the anode can be controlled appropriately such that flooding is unlikely to occur in the anode.

According to a seventh aspect of the present disclosure, in the compressor device in the fourth or fifth aspect, an upper limit of the temperature of the anode gas at the outlet of the anode may be reduced.

In the compressor device in any of the fourth and fifth aspects, the amount of water migrating from the cathode to the anode due to the pressure difference between the anode and the cathode tends to decrease. In this case, when the temperature of the anode gas at the outlet of the anode is high, the electrolyte membrane can easily dry up.

Therefore, in the compressor device in the present aspect, as the current flowing between the anode and the cathode decreases or as the pressure of the cathode gas decreases, the upper limit of the temperature of the anode gas at the outlet of the anode is reduced. In this case, the temperature of the anode gas at the outlet of the anode can be controlled appropriately such that drying up of the electrolyte membrane is unlikely to occur.

According to an eighth aspect of the present disclosure, in the compressor device in the second or third aspect, the controller may control the regulator to increase the difference between the temperature of the anode gas at the outlet of the anode and the temperature of the anode gas at an inlet of the anode. According to a ninth aspect of the present disclosure, in the compressor device in the eighth aspect, the controller may increase an upper limit of the difference.

In the compressor device in any of the second and third aspects, the amount of water migrating from the cathode to the anode due to the pressure difference between the anode and the cathode tends to increase.

Therefore, in the compressor device in the present aspect, as the current flowing between the anode and the cathode increases or as the pressure of the cathode gas increases, the difference between the temperature of the anode gas at the outlet of the anode and the temperature of the anode gas at the inlet of the anode is increased, so that the possibility of the occurrence of flooding in the anode is reduced. By increasing the upper limit of the temperature difference, the temperature of the anode gas at the outlet of the anode can be controlled appropriately such that the possibility of the occurrence of flooding in the anode is reduced.

According to a tenth aspect of the present disclosure, in the compressor device in the fourth or fifth aspect, the regulator may be controlled to reduce the difference between the temperature of the anode gas at the outlet of the anode and the temperature of the anode gas at an inlet of the anode. According to an eleventh aspect of the present disclosure, in the compressor device in the ninth aspect, the controller may reduce an upper limit of the difference.

In the compressor device in any of the fourth and fifth aspects, the amount of water migrating from the cathode to the anode due to the pressure difference between the anode and the cathode tends to decrease. In this case, when the temperature of the anode gas at the outlet of the anode is high, the electrolyte membrane can easily dry up.

Therefore, in the compressor device in the present aspect, as the current flowing between the anode and the cathode decreases or as the pressure of the cathode gas decreases, the difference between the temperature of the anode gas at the outlet of the anode and the temperature of the anode gas at the inlet of the anode is reduced, so that the possibility of the occurrence of drying up of the electrolyte membrane is reduced. Moreover, by reducing the upper limit of the temperature difference, the temperature of the anode gas at the outlet of the anode can be controlled appropriately such that the possibility of the occurrence of drying up of the electrolyte membrane is reduced.

A method for controlling a compressor device in a twelfth aspect of the present disclosure includes the step of causing, by applying a voltage between an anode and a cathode, hydrogen in an anode gas to move through an electrolyte membrane to the cathode and compressing the hydrogen, wherein, in the step of applying, the temperature of the anode gas at an outlet of the anode is adjusted based on at least one of the pressure of a cathode gas and a current flowing between the anode and the cathode under the application of the voltage.

In the method in the present aspect, the relative humidity of the anode gas can be adjusted more appropriately than in the conventional techniques. The details of the operational advantages of the method in the present aspect are the same as the operational advantages of the compressor device in the first aspect, and the description thereof will be omitted.

According to a thirteenth aspect of the present disclosure, in the method in the twelfth aspect, when the current flowing between the anode and the cathode under the application of the voltage increases, the temperature of the anode gas at the outlet of the anode may be increased.

The operational advantages of the method in the present aspect are the same as the operational advantages of the compressor device in the second aspect, and therefore the description thereof will be omitted.

According to a fourteenth aspect of the present disclosure, in the method in the twelfth or thirteenth aspect, when the pressure of the cathode gas increases, the temperature of the anode gas at the outlet of the anode may be increased.

The operational advantages of the method in the present aspect are the same as the operational advantages of the compressor device in the third aspect, and therefore the description thereof will be omitted.

According to a fifteenth aspect of the present disclosure, in the method in any one of the twelfth to fourteenth aspects, when the current flowing between the anode and the cathode under the application of the voltage decreases, the temperature of the anode gas at the outlet of the anode may be reduced.

The operational advantages of the method in the present aspect are the same as the operational advantages of the compressor device in the fourth aspect, and therefore the description thereof will be omitted.

According to a sixteenth aspect of the present disclosure, in the method in any one of the twelfth to fifteenth aspects, when the pressure of the cathode gas decreases, the temperature of the anode gas at the outlet of the anode may be reduced.

The operational advantages of the method in the present aspect are the same as the operational advantages of the compressor device in the fifth aspect, and therefore the description thereof will be omitted.

Embodiments of the present disclosure will be described with reference to the drawings. The embodiments described below show examples of the above aspects. Therefore, shapes, materials, components, arrangement positions of the components, and connection forms of the components, etc. shown below are merely examples and do not limit the aspects described above, unless these features are stated in the claims. Among the components in the following description, components not stated in independent claims defining the broadest concept of the aspects are described as optional components. In the drawings, descriptions of components with the same reference symbols may be omitted as appropriate. The drawings illustrate components schematically for the sake of facilitating understanding, and their shapes, dimensional ratio, etc. may not be accurately illustrated.

### (First embodiment)

In the following embodiment, the anode gas is a hydrogen-containing gas, and the cathode gas is compressed hydrogen. The structure and operation of an electrochemical hydrogen pump used as an example of the above-described compressor will be described.

### [Device structure]

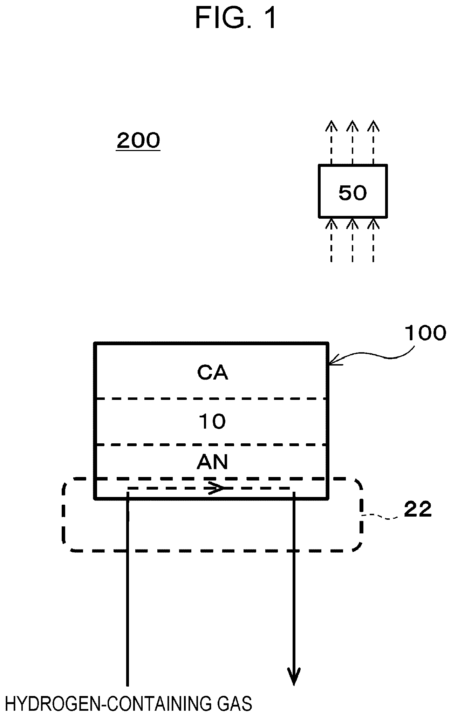

Fig. 1 is an illustration showing an example of a compressor device in the first embodiment.

In the example shown in Fig. 1, the compressor device 200 includes an electrochemical hydrogen pump 100. An electrochemical cell of the electrochemical hydrogen pump 100 includes an electrolyte membrane 10, an anode AN, and a cathode CA. The electrochemical hydrogen pump 100 may include a stack including a plurality of such electrochemical cells stacked together.

The electrochemical hydrogen pump 100 is a device in which, when a voltage is applied between the anode AN and the cathode CA, hydrogen in a hydrogen-containing gas supplied to the anode AN is caused to move to the cathode CA through the electrolyte membrane 10 and compressed.

The hydrogen-containing gas used above may be a hydrogen gas generated in an unillustrated water electrolysis device or a reformed gas generated in an unillustrated reformer.

The details of the stack and the details of a voltage applicator for applying the voltage will be described later.

The anode AN is disposed on one of the principal surfaces of the electrolyte membrane 10. The anode AN is an electrode including an anode catalyst layer and an anode feeder. The cathode CA is disposed on the other principal surface of the electrolyte membrane 10. The cathode CA is an electrode including a cathode catalyst layer and a cathode feeder. In this manner, the electrolyte membrane 10 is held between the anode AN and the cathode CA so as to be in contact with each of the anode catalyst layer and the cathode catalyst layer.

The electrolyte membrane 10 may have any structure so long as the membrane has proton conductivity. Examples of the electrolyte membrane 10 include fluorine-based polymer electrolyte membranes and hydrocarbon-based electrolyte membranes. Specifically, the electrolyte membrane 10 used may be, for example, Nafion (registered trademark, a product of DuPont), Aciplex (registered trademark, a product of Asahi Kasei Corporation), etc., but this is not a limitation.

The anode catalyst layer is disposed on one of the principal surfaces of the electrolyte membrane 10. The anode catalyst layer contains carbon that can support a catalyst metal (e.g., platinum) in a dispersed state, but this is not a limitation.

The cathode catalyst layer is disposed on the other principal surface of the electrolyte membrane 10. The cathode catalyst layer contains carbon that can support a catalyst metal (e.g., platinum) in a dispersed state, but this is not a limitation.

No particular limitation is imposed on the methods for preparing the catalyst in the cathode catalyst layer and the catalyst in the anode catalyst layer, and any of various methods can be used. For example, a carbon-based powder may be used, and examples thereof include powders of graphite, carbon black, and electrically conductive activated carbon. No particular limitation is imposed on the method for causing platinum or another catalyst metal to be supported on a carbon carrier. For example, a method such as powder mixing or liquid phase mixing may be used. Examples of the liquid phase mixing include a method in which a carrier such as carbon is dispersed in a catalyst component colloidal solution so that the catalyst component adsorbs on the carrier. No particular limitation is imposed on the supported state of the catalyst metal such as platinum on the carrier. For example, the catalyst metal may be formed into fine particles, and the fine particles may be highly dispersed and supported on the carrier.

The cathode feeder is disposed on the cathode catalyst layer. The cathode feeder is formed of a porous material and has electrical conductivity and gas diffusibility. Preferably, the cathode feeder has elasticity that allows the cathode feeder to appropriately follow the displacement and deformation of components caused by the differential pressure between the cathode CA and the anode AN during the operation of the electrochemical hydrogen pump 100. For example, a carbon fiber sintered product can be used as the base material of the cathode feeder, but this is not a limitation.

The anode feeder is disposed on the anode catalyst layer. The anode feeder is formed of a porous material and has electrical conductivity and gas diffusibility. Preferably, the anode feeder has stiffness high enough to withstand the pressing force by the electrolyte membrane 10 due to the differential pressure during the operation of the electrochemical hydrogen pump 100. For example, a carbon particle sintered body or a titanium particle sintered body coated with a noble metal such as platinum can be used as the base material of the anode feeder, but this is not a limitation.

Although not shown in Fig. 1, members and devices necessary for the hydrogen compression operation of the electrochemical hydrogen pump 100 are appropriately provided.

For example, a pair of anode and cathode separators may be used to externally sandwich the anode AN and the cathode CA therebetween. In this case, the anode separator in contact with the anode AN is an electrically conductive plate-shaped member for supplying the hydrogen-containing gas to the anode AN and leading an excess of the hydrogen-containing gas from the anode AN. The plate-shaped member includes a serpentine gas flow passage (hereinafter referred to as a serpentine flow passage) through which the hydrogen-containing gas flows. The cathode separator in contact with the cathode CA is an electrically conductive plate-shaped member for leading hydrogen from the cathode CA. The plate-shape member includes a gas flow passage through which the hydrogen led from the cathode CA flows.

In the electrochemical hydrogen pump 100, sealing members such as gaskets are generally provided on both sides of the electrochemical cell so as to prevent the high-pressure hydrogen from leaking to the outside and integrated in advance with the electrochemical cell to assemble the electrochemical hydrogen pump 100. The anode and cathode separators are disposed on the outer side of the electrochemical cell to mechanically fix the electrochemical cell and electrically connect the electrochemical cell to adjacent electrochemical cells in series.

In a general stack structure, about 10 to about 200 electrochemical cells and anode and cathode separators are stacked alternately. The stack is held between end plates with current collectors and insulating plates interposed therebetween, and the end plates are tightened with tightening rods. In this case, to supply an appropriate amount of the hydrogen-containing gas to the serpentine flow passage of each of the anode separators, it is necessary that the anode separators be configured such that downstream ends of groove-shaped passages that branch off from an appropriate conduit are connected to the respective serpentine flow passages of the anode separators. The above configured conduit line is referred to as a manifold, and the manifold is composed of, for example, a series of through holes formed in appropriate portions of members included in the stack.

The electrochemical hydrogen pump 100 includes a voltage applicator that applies a voltage between the anode AN and the cathode CA. The voltage applicator may have any structure so long as the voltage can be applied between the anode AN and the cathode CA. Specifically, a high-potential-side terminal of the voltage applicator is connected to the anode AN, and a low-potential-side terminal of the voltage applicator is connected to the cathode CA. Examples of the voltage applicator include DC/DC converters and AC/DC converters. When the voltage applicator is connected to a DC power source such as a solar cell, a fuel cell, or a battery, a DC/DC convertor is used. When the voltage applicator is connected to an AC power source such as a commercial power source, an AC/DC converter is used. The voltage applicator may be, for example, an electric power-type power supply in which the voltage applied between the anode AN and the cathode CA and the current flowing between the anode AN and the cathode CA are controlled such that the electric power supplied to the electrochemical cell of the electrochemical hydrogen pump 100 is adjusted to a prescribed set value.

The above unillustrated members and devices are merely examples, and these examples are not limitations.

In the electrochemical hydrogen pump 100, the electrolyte membrane 10 generally exhibits desired proton conductivity when it is in a wet state. Therefore, to allow the efficiency of the hydrogen compression operation of the electrochemical hydrogen pump 100 to be maintained at a desired value, it is necessary to maintain the electrolyte membrane 10 in a wet state. Therefore, in many conventional electrochemical hydrogen pumps 100, a high-temperature high-humidity hydrogen-containing gas is supplied to the anode AN.

Accordingly, as shown in Fig. 1, the compressor device 200 in the present embodiment includes a regulator 22 and a controller 50.

The regulator 22 is a device that regulates the temperature of the hydrogen-containing gas at the outlet of the anode AN. The regulator 22 may have any structure so long as it can regulate the temperature of the hydrogen-containing gas.

The regulator 22 may be, for example, a heater or a cooler. The heater may be, for example, an electric heater for heating the hydrogen-containing gas or may include a channel through which a heat medium for heating that can exchange heat with the hydrogen-containing gas flows. The cooler may include a channel through which a heat medium for cooling that can exchange heat with the hydrogen-containing gas flows.

As shown in Fig. 1, a channel for supplying the hydrogen-containing gas and a channel for discharging the hydrogen-containing gas are disposed in appropriate positions in the electrochemical hydrogen pump 100.

The downstream end of the channel for supplying the hydrogen-containing gas may be connected to any position that is in communication with the anode AN of the electrochemical hydrogen pump 100. When the electrochemical hydrogen pump 100 includes the stack described above, the downstream end of the channel for supplying the hydrogen-containing gas may be in communication with the manifold for introducing the hydrogen-containing gas. The upstream end of the channel for supplying the hydrogen-containing gas may be connected to, for example, a supply source (not shown) of the hydrogen-containing gas. Examples of the supply source of the hydrogen-containing gas include, but not limited to, water electrolysis devices capable of generating a high-humidity hydrogen-containing gas through water electrolysis and reformers capable of generating a high-humidity hydrogen-containing gas through a reforming reaction of a hydrocarbon compound.

The upstream end of the channel for discharging the hydrogen-containing gas may be connected to any position that is in communication with the anode AN of the electrochemical hydrogen pump 100. When the electrochemical hydrogen pump 100 includes the stack described above, the upstream end of the channel for discharging the hydrogen-containing gas may be in communication with a manifold for discharging the hydrogen-containing gas. The channel for discharging the hydrogen-containing gas may extend such that the hydrogen-containing gas discharged from the anode AN is recycled to the anode AN.

The controller 50 controls the regulator 22 based on at least one of the current flowing between the anode AN and the cathode CA under the application of the voltage and the pressure of the compressed hydrogen compressed in the cathode CA to thereby adjust the temperature of the hydrogen-containing gas at the outlet of the anode AN.

The current flowing between the anode AN and the cathode CA is detected by an appropriate detector (not shown). This detector may be a detector that directly detects the current flowing between the anode AN and the cathode CA or may be a detector that indirectly detects the current. Examples of the former detector include an ammeter. Examples of the latter detector include a voltmeter that detects the voltage applied between the anode AN and the cathode CA.

The pressure of the compressed hydrogen compressed in the cathode CA is detected by an appropriate detector (not shown). This detector may be a detector that directly detects the pressure of the compressed hydrogen or may be a detector that indirectly detects the pressure of the compressed hydrogen. Examples of the former detector include a pressure gauge. Examples of the latter detector include an ammeter that detects the current flowing between the anode AN and the cathode CA.

The controller 50 includes, for example, an arithmetic circuit (not shown) and a storage circuit (not shown). Examples of the arithmetic circuit includes MPUs and CPUs. Examples of the storage circuit include memories. The controller 50 may be a single controller that performs centralized control or may include a plurality of controllers that perform decentralized control in a synergistic manner.

As described above, with the compressor device 200 in the present embodiment and the method for controlling the compressor device 200, the relative humidity of the hydrogen-containing gas can be adjusted more appropriately than with conventional devices and methods. Specifically, the distribution of water in the anode AN depends on the current flowing between the anode AN and the cathode CA, the pressure of the compressed hydrogen present in the cathode CA, etc. Therefore, when the temperature of the hydrogen-containing gas at the outlet of the anode is not adjusted based on the current flowing between the anode AN and the cathode CA and the pressure of the compressed hydrogen compressed in the cathode CA, it may be difficult to appropriately control the relative humidity of the hydrogen-containing gas at the outlet of the anode.

However, with the compressor device 200 in the present embodiment and the method for controlling the compressor device 200, since the regulator 22 is controlled based on at least one of the current flowing between the anode AN and the cathode CA and the pressure of the compressed hydrogen compressed in the cathode CA as described above, the relative humidity of the hydrogen-containing gas at the outlet of the anode can be adjusted more appropriately than when the above control is not performed. Therefore, in the compressor device 200 in the present embodiment and the method for controlling the compressor device 200, the efficiency of the hydrogen compression operation of the electrochemical hydrogen pump 100 can be maintained at a high level.

### (First Example)

When the hydrogen-containing gas in the electrochemical cell of the electrochemical hydrogen pump 100 is in an over-humidified state, condensation of water may occur in the anode of the electrochemical cell. Then the condensed water may lead to flooding in the anode AN, and this may cause a reduction in hydrogen diffusivity, so that the diffusion overpotential may increase.

In contrast, as the relative humidity of the hydrogen-containing gas in the electrochemical cell of the electrochemical hydrogen pump 100 decreases, it becomes more difficult to maintain the wet state of the electrolyte membrane 10 that is necessary to maintain high proton conductivity. In this case, drying up of the electrolyte membrane 10 is likely to occur. For example, it has been found that, when the relative humidity of the hydrogen-containing gas falls below about 55% in a test using the electrolyte membrane 10 alone, its electric resistance increases.

It is therefore important to appropriately adjust the relative humidity of the hydrogen-containing gas to be supplied to the anode AN, from the viewpoint of preventing flooding in the anode AN and preventing drying up of the electrolyte membrane 10.

Accordingly, various experiments were performed as follows to verify whether the relative humidity of the hydrogen-containing gas in the anode AN of the electrochemical hydrogen pump 100 could be maintained appropriately, and the results of the experiments were discussed.

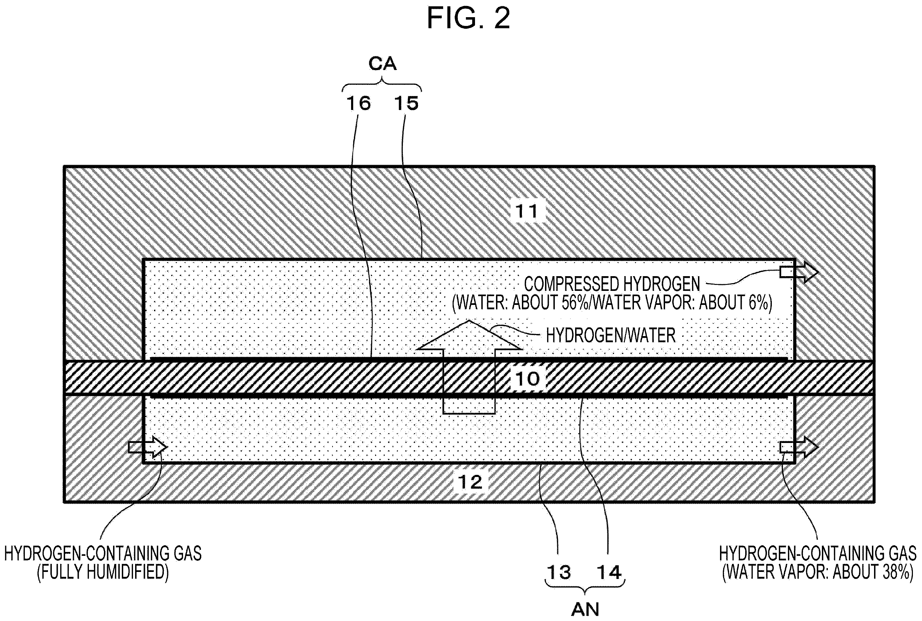

First, referring to Fig. 2, a description will be given of the flows of hydrogen and water (water vapor) when, for example, a hydrogen-containing gas with a relative humidity of 100% or close to 100% (in a fully humidified state) is supplied to the anode AN in the electrochemical cell and hydrogen in the hydrogen-containing gas flowing through a serpentine flow passage provided in an anode separator 12 is caused to move from the anode AN to the cathode CA through an electrochemical reaction at a hydrogen utilization rate of about 80%.

In Fig. 2, the illustrations of the manifold, the sealing members, the gas channels, etc. are omitted for the purpose of simplifying the drawing.

When the hydrogen-containing gas is supplied to the anode AN of the electrochemical hydrogen pump 100 and electric power is supplied from the voltage applicator to the electrochemical hydrogen pump 100, hydrogen molecules in an anode catalyst layer 14 of the electrochemical hydrogen pump 100 are separated into hydrogen ions (protons) and electrons through an oxidation reaction (formula (1)). The protons propagate through the electrolyte membrane 10 and move to a cathode catalyst layer 16. The electrons move through the voltage applicator to the cathode catalyst layer 16 of the cathode CA. Then the hydrogen molecules are re-generated in the cathode catalyst layer 16 through a reduction reaction (formula (2)).

Anode: H² (low pressure) → 2H⁺ + 2e⁻ (1)

Cathode: 2H⁺ + 2e⁻ → H² (high pressure) (2)

As described above, in the electrochemical hydrogen pump 100, the voltage is applied between the anode AN and the cathode CA. This allows about 80% of hydrogen in the hydrogen-containing gas to move from the anode AN to the cathode CA, and the operation for compressing hydrogen (hydrogen compression operation) is thereby performed in a cathode feeder 15 of the cathode CA. Moreover, the remaining about 20% of the hydrogen in the hydrogen-containing gas that has passed through an anode feeder 13 and the serpentine flow passage is led as an off gas from the anode AN, then returned to the anode AN, and thereby recycled.

The hydrogen compressed in the cathode feeder 15 (compressed hydrogen) is discharged to the outside through a gas channel provided in a cathode separator 11 at an appropriate timing. The dew point of the compressed hydrogen increases in proportion to its pressure. Therefore, as shown in Fig. 2, most of the moisture in the compressed hydrogen is in a liquid state.

### [Experiments]

In the following experiments using an actual device, the dew point of the hydrogen-containing gas to be supplied to the anode AN is adjusted using an unillustrated humidifier (e.g., a bubbler) such that the amount of humidification becomes a prescribed amount. The temperature of the hydrogen-containing gas in the anode AN is adjusted to a prescribed temperature by the regulator 22.

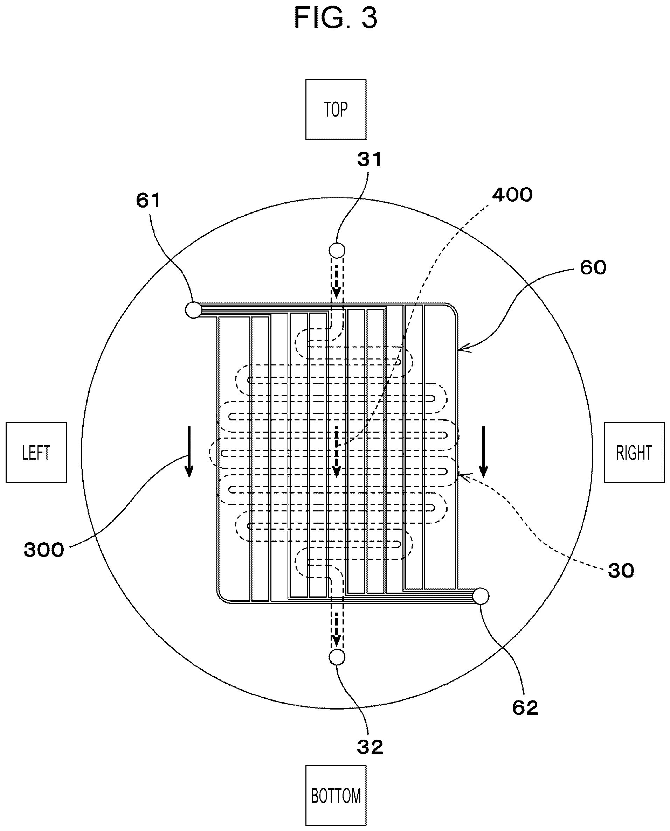

In the present Experimental Example, the regulator 22 used is a device including a heat medium passage 60 shown in Fig. 3. A heat medium (e.g., warm water) that can exchange heat with the hydrogen-containing gas flows through the heat medium passage 60, and the heat medium passage 60 is composed of passage grooves provided on one of the principal surfaces of the anode separator. The hydrogen-containing gas flows through the serpentine flow passage 30, and the serpentine flow passage 30 is composed of a passage groove provided on the other principal surface of the anode separator. In Fig. 3, the "top," "bottom," "right," and "left" sides are as shown in the figure for the sake of convenience of description.

In the example shown in Fig. 3, a first direction 300 (thick solid arrows) extending from the upstream side of the flow of the heat medium in the heat medium passage 60 to the downstream side is the same as a second direction 400 (thick dotted arrows) extending from the upstream side of the flow of the hydrogen-containing gas in the serpentine flow passage 30 to the downstream side.

Specifically, the heat medium passage 60 includes a plurality of linear portions that allow communication between a heat medium introduction manifold 61 and a heat medium discharge manifold 62. These linear portions are arranged at substantially regular intervals in the left-right direction and extend in the top-bottom direction so as to perpendicularly intersect a plurality of linear portions of the serpentine flow passage 30 that extend in the left-right direction. The top-to-bottom flow direction of the heat medium through the linear portions is parallel to the first direction 300.

The serpentine flow passage 30 includes the plurality of linear portions and a plurality of folded portions that allow communication between a hydrogen-containing gas introduction manifold 31 and a hydrogen-containing gas discharge manifold 32. The top-to-bottom flow direction of the hydrogen-containing gas through the plurality of folded portions is parallel to the second direction 400.

The above-described passage structure can prevent the occurrence of flooding in the anode AN. This is due to the following reason.

If the first direction 300 is opposite to the second direction 400, it is difficult to appropriately increase the temperature of the hydrogen-containing gas in the vicinity of the hydrogen-containing gas discharge manifold 32. Therefore, the hydrogen-containing gas in the vicinity of the hydrogen-containing gas discharge manifold 32 may fall into an over-humidified state. In this case, flooding can easily occur in the anode AN due to condensation of water vapor in the hydrogen-containing gas.

However, in the passage structure in Fig. 3, the heat medium flows through the heat medium passage 60 from the upstream side to the downstream side while collecting the heat generated by IR loss due to the resistance of the electrolyte membrane 10 and the heat of condensation of water vapor. Therefore, the heat medium that exchanges heat with the hydrogen-containing gas in the vicinity of the hydrogen-containing gas discharge manifold 32 can be heated to an appropriate temperature. In this case, the temperature of the hydrogen-containing gas in the vicinity of the hydrogen-containing gas discharge manifold 32 can be increased appropriately, so that the hydrogen-containing gas in the vicinity of the hydrogen-containing gas discharge manifold 32 is prevented from falling into an over-humidified state.

### <Details and results of experiments>

Verification experiments using an actual device were performed as follows to examine the influence of the diffusion overpotential of the electrochemical cell in the electrochemical cell when the temperature of the hydrogen-containing gas was changed.

First, the dew point, flow rate, and temperature of the hydrogen-containing gas, the current density in the electrochemical cell, and the hydrogen compression operation of the compressor device 200 were set to the following values.

The current shown below (current density: 1.0 A/cm²) is an estimated minimum value at which the operation of the electrochemical hydrogen pump 100 is stabilized, and the flow rate of the hydrogen-containing gas was determined according to this current density.
- Dew point of the hydrogen-containing gas: 49°C
- Flow rate of the hydrogen-containing gas (at the inlet of the anode): 2.66 NL/minute; 30 kPa (gauge pressure)
- Temperature of the hydrogen-containing gas (at the inlet of the anode): 50°C
- Current density: 1.0 A/cm²
- Hydrogen compression operation: about 80% of hydrogen in the hydrogen-containing gas is compressed to 1.0 MPa (gauze pressure) in the cathode CA.

In this case, as the hydrogen-containing gas flows through the anode feeder 13 and the serpentine flow passage, hydrogen in the hydrogen-containing gas gradually moves to the cathode CA. In the end, about 20% of the hydrogen in the hydrogen-containing gas is led from the outlet of the anode AN as an off gas. Specifically, the amount of the hydrogen in the hydrogen-containing gas introduced into the anode AN gradually decreases from 100% to about 20% as the hydrogen-containing gas flows from the inlet of the anode to the outlet of the anode.

Meanwhile, the amount of water in the hydrogen-containing gas is determined by the balance between the amount of water migrating from the anode AN to the cathode CA through entrainment with hydrogen and the amount of hydrogen migrating from the cathode CA to the anode AN due to the difference in pressure between the cathode CA and the anode. As described above, the distribution of water in the electrochemical cell depends on the current flowing between the anode AN and the cathode CA, the pressure of the compressed hydrogen, etc.

The distribution of water in the electrochemical cell in the actual device was actually measured. As shown in Fig. 2, it was found that water in the hydrogen-containing gas was distributed such that about 62% of the water (water vapor and liquid water) in the hydrogen-containing gas was moved to the cathode CA and about 38% of the water (water vapor) in the hydrogen-containing gas was led from the outlet of the anode AN.

The diffusion overpotential of the electrochemical cell was actually measured under the above conditions, and an increase in the diffusion overpotential was found. In this case, the results of analysis of the amount of water in the hydrogen-containing gas discharged from the outlet of the anode showed that the hydrogen-containing gas at the outlet of the anode was in an over-humidified state.

Therefore, the distribution of water in the electrochemical cell when the conditions for the hydrogen compression operation were changed was examined. Specifically, the pressure of the compressed hydrogen compressed in the cathode CA was increased sequentially to 1.0 MPa, 10.0 MPa, 20.0 MPa, 30.0 MPa, and 40.0 MPa. Then it was found that, as the pressure of the compressed hydrogen compressed in the cathode CA increases, the amount of water migrating from the anode AN to the cathode CA with respect to the total amount of water in the hydrogen-containing gas supplied to the anode AN decreases. It was also found that the amount of water in the hydrogen-containing gas discharged from the outlet of the anode increases in inverse proportion to the pressure of the compressed hydrogen. In this case, the results of analysis of the amount of water in the hydrogen-containing gas discharged from the outlet of the anode showed that the hydrogen-containing gas was in an over-humidified state.

Next, the flow rate of the heat medium flowing through the heat medium passage 60 was changed to increase the temperature of the hydrogen-containing gas at the outlet of the anode. Specifically, when the heat medium having a temperature of 55°C was supplied at a flow rate of 0.20 L/minute per electrochemical cell, the temperature of the hydrogen-containing gas at the outlet of the anode was 56°C. In this case, the hydrogen-containing gas at the outlet of the anode was found to be in an over-humidified state, and the voltage applied to the electrochemical cell was unstable. When the heat medium having a temperature of 55°C was supplied at a flow rate of 0.07 L/minute per electrochemical cell, the temperature of the hydrogen-containing gas at the outlet of the anode was 58°C. In this case, it was found that the over-humidified state of the hydrogen-containing gas at the outlet of the anode was mitigated (relative humidity: about 90%), and the voltage applied to the electrochemical cell was stabilized.

The above verification experiments are merely examples, and these examples are not limitations.

### <Discussion of experimental results>

The present inventors thought that the increase in diffusion overpotential would be a phenomenon due to flooding in the anode AN. Then the inventors conducted extensive studies on the cause of the flooding in the anode AN and inferred that the amount of water migrating from the cathode CA to the anode AN due to the pressure difference between the anode AN and the cathode CA might be involved in the flooding at the outlet of the anode. This inference was verified by experiments in which the pressure of the compressed hydrogen compressed in the cathode CA of the actual device was increased and experiments in which the flow rate of the heat medium flowing through the heat medium passage 60 of the actual device was changed to increase the temperature of the hydrogen-containing gas at the outlet of the anode.

### <Control Example of compressor device>

In the compressor device 200 in the present Example, when the pressure of the compressed hydrogen compressed in the cathode CA increases, the controller 50 controls the regulator 22 to increase the temperature of the hydrogen-containing gas at the outlet of the anode AN. Moreover, in the compressor device 200 in the present Example, when the current flowing between the anode AN and the cathode CA under the application of the voltage increases, the controller 50 controls the regulator 22 to increase the temperature of the hydrogen-containing gas at the outlet of the anode AN.

In the case where the regulator 22 is a temperature regulator utilizing a heat medium (e.g., warm water), when the pressure of the hydrogen-containing gas supplied to the anode AN increases, the controller 50 may control the temperature regulator to increase the temperature of the heat medium that exchanges heat with the hydrogen-containing gas. Alternatively, the controller 50 may control the temperature regulator to reduce the flow rate of the heat medium that exchanges heat with the hydrogen-containing gas.

As an example of the latter control, the dew point, flow rate, and temperature of the hydrogen-containing gas and the current density in the electrochemical cell were set to values below. In this case, when the pressure of the compressed hydrogen compressed in the cathode CA was increased from 1.0 MPa to 40 MPa, the flow rate of the heat medium per electrochemical cell was reduced from 0.20 L/minute to 0.12 L/minute. This caused the temperature of the hydrogen-containing gas at the outlet of the anode to increase by 2°C. In this manner, the over-humidified state of the hydrogen-containing gas at the outlet of the anode was mitigated.
- Dew point of the hydrogen-containing gas: 49°C
- Flow rate of the hydrogen-containing gas (at the inlet of the anode): 2.66 NL/minute; 30 kPa (gauze pressure)
- Temperature of the hydrogen-containing gas (at the inlet of the anode): 50°C
- Current density: 1.0 A/cm²
- Hydrogen compression operation: about 80% of hydrogen in the hydrogen-containing gas is compressed to 1.0 MPa (gauze pressure) in the cathode CA → compressed to 40 MPa (gauze pressure) in the cathode CA.

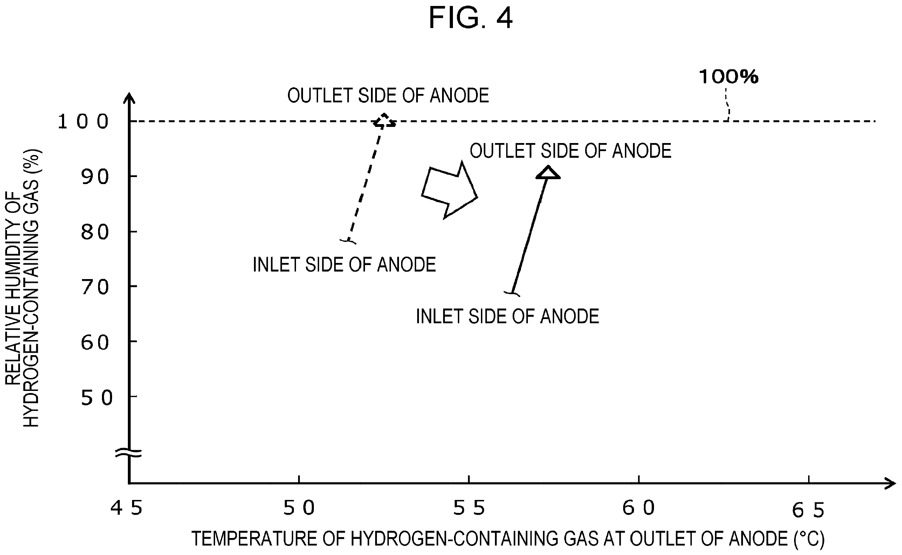

In an example of control shown in Fig. 4, the dew point and flow rate of the hydrogen-containing gas, the current density in the electrochemical cell, and the hydrogen compression operation of the compressor device 200 were set to the following values, and the temperature of the hydrogen-containing gas at the outlet of the anode was changed, so that the relative humidity of the hydrogen-containing gas at the outlet of the anode was changed from 100% to an appropriate value as shown by an arrow. Although not shown in the figure, the relative humidity of the hydrogen-containing gas at the inlet of the anode that is represented by a solid line in Fig. 4 was about 55% even when the pressure of the hydrogen-containing gas at the inlet of the anode was taken into consideration. This relative humidity (about 55%) is a condition under which both drying up of the electrolyte membrane 10 and flooding in the anode AN do not occur.
- Dew point of the hydrogen-containing gas: 49°C
- Flow rate of the hydrogen-containing gas (at the inlet of the anode): 2.66 NL/minute; 30 kPa (gauze pressure)
- Temperature of the hydrogen-containing gas (at the inlet of the anode): 50°C
- Current density: 1.0 A/cm²
- Hydrogen compression operation: about 80% of hydrogen in the hydrogen-containing gas is compressed to 1.0 MPa (gauze pressure) in the cathode CA.

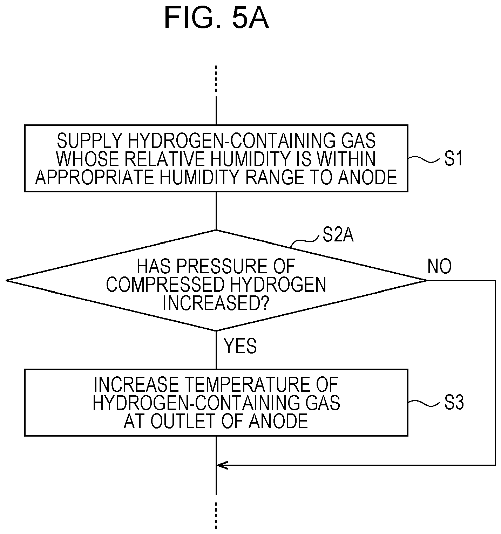

Fig. 5A is a flowchart in a First Control Example of the compressor device in the First Example of the first embodiment.

For example, the arithmetic circuit of the controller 50 may read a control program from the storage circuit of the controller 50 to perform the following operation. However, it is not always necessary to perform the following operation using the controller 50. The operator may perform part of the operation. In the description of the following example, the controller 50 is used to control the operation.

First, while the hydrogen-containing gas whose relative humidity is within an appropriate humidity range is supplied to the anode AN (step S1), a determination is made in step S2A as to whether or not the pressure of the compressed hydrogen compressed in the cathode CA has increased. The appropriate humidity range means a humidity range in which drying up of the electrolyte membrane 10 and also flooding in the anode AN do not occur.

In step S2A, if a determination is made that the pressure of the compressed hydrogen has not increased, the operations in step S1 and the subsequent step are re-executed at an appropriate time.

In step S2A, if a determination is made that the pressure of the compressed hydrogen has increased, the control in step S3 is performed in which the temperature of the hydrogen-containing gas at the outlet of the anode is increased.

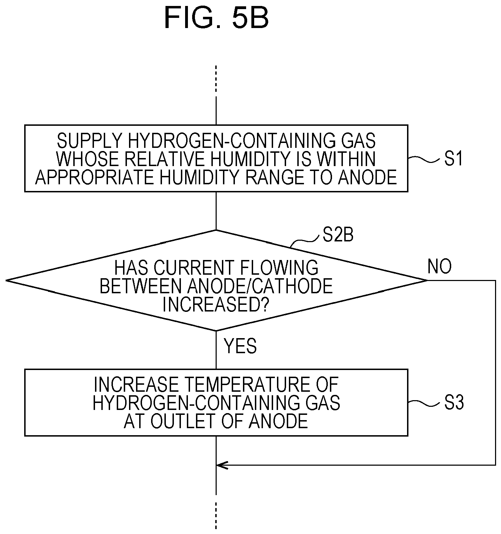

Fig. 5B is a flowchart in a Second Control Example of the compressor device in the First Example of the first embodiment.

For example, the arithmetic circuit of the controller 50 may read a control program from the storage circuit of the controller 50 to perform the following operation. However, it is not always necessary to perform the following operation using the controller 50. The operator may perform part of the operation. In the description of the following example, the controller 50 is used to control the operation.

First, while the hydrogen-containing gas whose relative humidity is within the appropriate humidity range is supplied to the anode AN (step S1), a determination is made in step S2B as to whether or not the current flowing between the anode AN and the cathode CA has increased.

In step S2B, if a determination is made that the current has not increased, the operations in step S1 and the subsequent step are re-executed at an appropriate time.

In step S2B, if a determination is made that the current has increased, the control in step S3 is performed in which the temperature of the hydrogen-containing gas at the outlet of the anode is increased.

As the pressure of the compressed hydrogen compressed in the cathode CA increases, the amount of water migrating from the cathode CA to the anode AN due to the pressure difference between the anode AN and the cathode CA increases. Then the relative humidity of the hydrogen-containing gas at the outlet of the anode increases. In this case, flooding may occur in the anode AN. Specifically, for example, since the relative humidity of the hydrogen-containing gas is higher at the outlet of the anode than at the inlet of the anode, flooding is more likely to occur at the outlet of the anode.

However, in the compressor device 200 in the present Example and the method for controlling the compressor device 200, when the pressure of the compressed hydrogen increases, the temperature of the hydrogen-containing gas at the outlet of the anode is increased, so that the possibility of the occurrence of flooding in the anode AN can be reduced.

As the current flowing between the anode AN and the cathode CA increases, the pressure of the compressed hydrogen compressed in the cathode CA increases. Therefore, the amount of water migrating from the cathode CA to the anode AN due to the pressure difference between the anode AN and the cathode CA increases. Then the relative humidity of the hydrogen-containing gas at the outlet of the anode increases. In this case, flooding may occur in the anode AN. Specifically, for example, since the relative humidity of the hydrogen-containing gas is higher at the outlet of the anode than at the inlet of the anode, flooding is more likely to occur at the outlet of the anode.

However, in the compressor device 200 in the present Example and the method for controlling the compressor device 200, when the current flowing between the anode AN and the cathode CA increases, the temperature of the hydrogen-containing gas at the outlet of the anode is increased, so that the possibility of the occurrence of flooding in the anode AN can be reduced.

The compressor device 200 in the present Example and the method for controlling the compressor device 200 may be the same as those in the first embodiment except for the above features.

### (Second Example)

In the compressor device 200 in the present Example, when the pressure of the compressed hydrogen compressed in the cathode CA decreases, the controller 50 controls the regulator 22 to reduce the temperature of the hydrogen-containing gas at the outlet of the anode AN. In the compressor device 200 in the present Example, when the current flowing between the anode AN and the cathode CA under the application of the voltage decreases, the controller 50 controls the regulator 22 to reduce the temperature of the hydrogen-containing gas at the outlet of the anode AN.

In the case where the regulator 22 is a temperature regulator utilizing a heat medium (e.g., warm water), when the pressure of the hydrogen-containing gas supplied to the anode AN decreases, the controller 50 may control the temperature regulator to reduce the temperature of the heat medium that exchanges heat with the hydrogen-containing gas. Alternatively, the controller 50 may control the temperature regulator to increase the flow rate of the heat medium that exchanges heat with the hydrogen-containing gas.

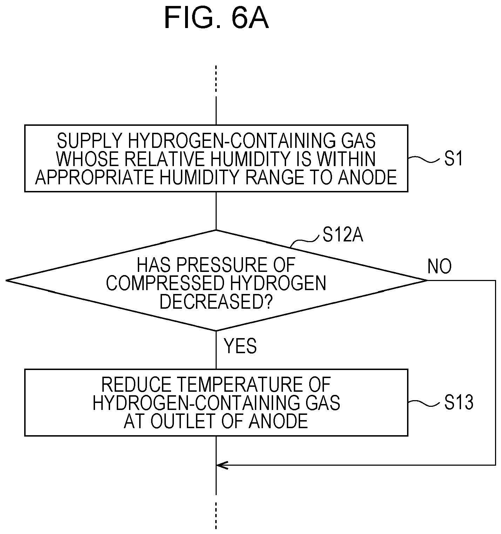

Fig. 6A is a flowchart in a First Control Example of the compressor device in the Second Example of the first embodiment.

For example, the arithmetic circuit of the controller 50 may read a control program from the storage circuit of the controller 50 to perform the following operation. However, it is not always necessary to perform the following operation using the controller 50. The operator may perform part of the operation. In the description of the following example, the controller 50 is used to control the operation.

First, while the hydrogen-containing gas whose relative humidity is within the appropriate humidity range is supplied to the anode AN (step S1), a determination is made in step S 12A as to whether or not the pressure of the compressed hydrogen compressed in the cathode CA has decreased.

In step S 12A, if a determination is made that the pressure of the compressed hydrogen has not decreased, the operations in step S1 and the subsequent step are re-executed at an appropriate time.

In step S 12A, if a determination is made that the pressure of the compressed hydrogen has decreased, the control in step S13 is performed in which the temperature of the hydrogen-containing gas at the outlet of the anode is reduced.

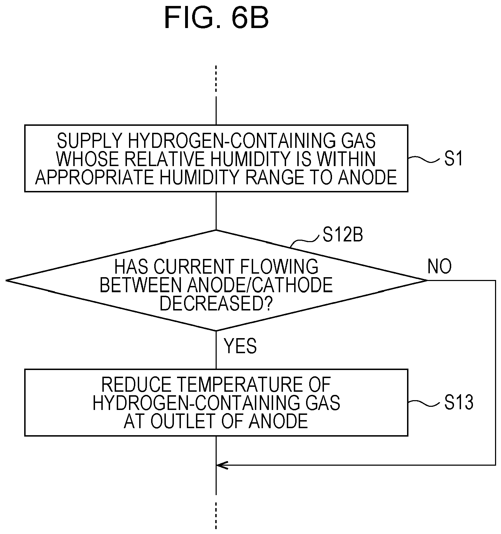

Fig. 6B is a flowchart in a Second Control Example of the compressor device in the Second Example of the first embodiment.

For example, the arithmetic circuit of the controller 50 may read a control program from the storage circuit of the controller 50 to perform the following operation. However, it is not always necessary to perform the following operation using the controller 50. The operator may perform part of the operation. In the description of the following example, the controller 50 is used to control the operation.

First, while the hydrogen-containing gas whose relative humidity is within the appropriate humidity range is supplied to the anode AN (step S 1), a determination is made in step S 12B as to whether or not the current flowing between the anode AN and the cathode CA has decreased.

In step S12B, if a determination is made that the current has not decreased, the operations in step S1 and the subsequent step are re-executed at an appropriate time.

In step S12B, if a determination is made that the current has decreased, the control in step S13 is performed in which the temperature of the hydrogen-containing gas at the outlet of the anode is reduced.

As the pressure of the compressed hydrogen compressed in the cathode CA decreases, the amount of water migrating from the cathode CA to the anode AN due to the pressure difference between the anode AN and the cathode CA decreases. In this case, when the temperature of the hydrogen-containing gas at the outlet of the anode remains high, drying up of the electrolyte membrane 10 may occur.

However, in the compressor device 200 in the present Example and the method for controlling the compressor device 200, when the pressure of the compressed hydrogen decreases, the temperature of the hydrogen-containing gas at the outlet of the anode is reduced, so that the possibility of drying up of the electrolyte membrane 10 can be reduced.

As the current flowing between the anode AN and the cathode CA decreases, the pressure of the compressed hydrogen decreases. Therefore, the amount of water migrating from the cathode CA to the anode AN due to the pressure difference between the anode AN and the cathode CA decreases. In this case, when the temperature of the hydrogen-containing gas at the outlet of the anode remains high, drying up of the electrolyte membrane 10 may occur.

However, in the compressor device 200 in the present Example and the method for controlling the compressor device 200, when the current flowing between the anode AN and the cathode CA decreases, the temperature of the hydrogen-containing gas at the outlet of the anode is reduced, so that the possibility of drying up of the electrolyte membrane 10 can be reduced.

The compressor device 200 in the present Example and the method for controlling the compressor device 200 may be the same as those in the first embodiment or the First Example of the first embodiment except for the above features.

### (Second embodiment)

A compressor device 200 in the present embodiment is the same as that in the First Example of the first embodiment except for the details of the control by the controller 50 described below.

The controller 50 increases the upper limit of the temperature of the hydrogen-containing gas at the outlet of the anode AN in the compressor device 200 in the First Example of the first embodiment.

For example, the controller 50 controls the regulator 22 to increase the difference between the temperature of the hydrogen-containing gas at the outlet of the anode AN and the temperature of the hydrogen-containing gas at the inlet of the anode AN. In this case, the upper limit of the temperature difference is increased.

For example, when the current density in the electrochemical cell is 1.0 A/cm², the regulator 22 may be controlled such that the pressure of the compressed hydrogen compressed in the cathode CA (hereinafter referred to as cathode gas pressure P) and the difference between the temperature of the hydrogen-containing gas at the outlet of the anode AN and the temperature of the hydrogen-containing gas at the inlet of the anode AN (hereinafter referred to as hydrogen-containing gas temperature difference TS) satisfy the following relations. This current (current density: 1.0 A/cm²) is an estimated minimum current value at which the operation of the electrochemical hydrogen pump 100 is stabilized, and the flow rate of the hydrogen-containing gas was determined according to this current density.
- Hydrogen-containing gas temperature difference TS = 3°C (cathode gas pressure P = 1.0 MPa)
- Hydrogen-containing gas temperature difference TS = 4°C (cathode gas pressure P = 10.0 MPa)
- Hydrogen-containing gas temperature difference TS = 5°C (cathode gas pressure P = 20.0 MPa)
- Hydrogen-containing gas temperature difference TS = 6°C (cathode gas pressure P = 40.0 MPa)

For example, when the current density in the electrochemical cell is 2.5 A/cm², the regulator 22 may be controlled such that the cathode gas pressure P and the hydrogen-containing gas temperature difference TS satisfy the following relations. This current (Current density: 2.5 A/cm²) is a value based on the assumption that the electrochemical hydrogen pump 100 is in rated operation, and the flow rate of the hydrogen-containing gas was determined according to this current density.
- Hydrogen-containing gas temperature difference TS = 6°C (cathode gas pressure P = 1.0 MPa)
- Hydrogen-containing gas temperature difference TS = 6.5°C (cathode gas pressure P = 10.0 MPa)
- Hydrogen-containing gas temperature difference TS = 7°C (cathode gas pressure P = 20.0 MPa)
- Hydrogen-containing gas temperature difference TS = 8°C (cathode gas pressure P = 40.0 MPa)

These hydrogen-containing gas temperature differences TS and cathode gas pressures P are merely examples, and these examples are not limitations.

In the compressor device 200 in the First Example of the first embodiment, the amount of water migrating from the cathode CA to the anode AN due to the pressure difference between the anode AN and the cathode CA tends to increase.

Therefore, in the compressor device 200 in the present embodiment, as the current density in the electrochemical cell increases or as the cathode gas pressure P increases, the upper limit of the temperature of the hydrogen-containing gas at the outlet of the anode AN is increased. In this manner, the temperature of the hydrogen-containing gas at the outlet of the anode can be controlled appropriately such that flooding is less likely to occur in the anode AN.

For example, in the compressor device 200 in the present embodiment, as the current density in the electrochemical cell increases or as the cathode gas pressure P increases, the hydrogen-containing gas temperature difference TS is increased, and the possibility of the occurrence of flooding in the anode AN is thereby reduced. By increasing the upper limit of the temperature difference TS, the temperature of the hydrogen-containing gas at the outlet of the anode can be controlled appropriately such that the possibility of the occurrence of flooding in the anode AN is reduced.

The compressor device 200 in the present embodiment may be the same as that in the first embodiment or the First Example of the first embodiment except for the above features.

### (Third embodiment)

A compressor device 200 in the present embodiment is the same as that in the Second Example of the first embodiment except for the details of the control by the controller 50 described below.

The controller 50 reduces the upper limit of the temperature of the hydrogen-containing gas at the outlet of the anode AN in the compressor device 200 in the Second Example of the first embodiment.

For example, the controller 50 controls the regulator 22 to reduce the difference between the temperature of the hydrogen-containing gas at the outlet of the anode AN and the temperature of the hydrogen-containing gas at the inlet of the anode AN. In this case, the upper limit of the temperature difference is reduced.

Specific examples of the relation between the cathode gas pressure P and the hydrogen-containing gas temperature difference TS when the current density in the electrochemical cell is 1.0 A/cm² or 2.5 A/cm² are the same as those described in the second embodiment, and the description thereof will be omitted.

In the compressor device 200 in the Second Example of the first embodiment, the amount of water migrating from the cathode CA to the anode AN due to the pressure difference between the anode AN and the cathode CA tends to decrease. In this case, when the temperature of the hydrogen-containing gas at the outlet of the anode AN is high, drying up of the electrolyte membrane 10 is likely to occur.

Therefore, in the compressor device 200 in the present embodiment, as the current density in the electrochemical cell decreases or as the cathode gas pressure P decreases, the upper limit of the temperature of the hydrogen-containing gas at the outlet of the anode AN is reduced. In this manner, the temperature of the hydrogen-containing gas at the outlet of the anode can be appropriately controlled such that drying up of the electrolyte membrane 10 is less likely to occur.

For example, in the compressor device 200 in the present embodiment, as the current density in the electrochemical cell decreases or as the cathode gas pressure P decreases, the hydrogen-containing gas temperature difference TS is reduced, and the possibility of the occurrence of drying up of the electrolyte membrane 10 is thereby reduced. By reducing the upper limit of the temperature difference TS, the temperature of the hydrogen-containing gas at the outlet of the anode can be controlled appropriately such that the possibility of the occurrence of drying up of the electrolyte membrane 10 is reduced.

The compressor device 200 in the present embodiment may be the same as that in the first embodiment or the Second Example of the first embodiment except for the features described above.

The first embodiment, the First and Second Examples of the first embodiment, the second embodiment, and the third embodiment may be combined with each other so long as they do not exclude each other.

From the foregoing description, many modifications and other embodiments of the present disclosure will be apparent to those skilled in the art. Therefore, the foregoing description is to be construed as illustrative only and is provided for the purpose of teaching those skilled in the art the best mode of carrying out the present disclosure. The details of the structure and/or function of the present disclosure may be changed substantially without departing from the spirit of the present disclosure.

### Industrial Applicability

The aspects of the present disclosure can be used as a compressor device in which the relative humidity of the anode gas can be controlled more appropriately than in conventional techniques and as a method for controlling the compressor device.

### Reference Signs List

10: electrolyte membrane
11: cathode separator
12: anode separator
13: anode feeder
14: anode catalyst layer
15: cathode feeder
16: cathode catalyst layer
22: regulator
30: serpentine flow passage
31: hydrogen-containing gas introduction manifold
32: hydrogen-containing gas discharge manifold
50: controller
60: heat medium passage
61: heat medium introduction manifold
62: heat medium discharge manifold
100: electrochemical hydrogen pump
200: compressor device
300: first direction
400: second direction
AN: anode
CA: cathode

## Claims

1. A compressor device comprising:
a compressor that causes, by applying a voltage between an anode and a cathode, hydrogen in an anode gas to move through an electrolyte membrane to the cathode and compresses the hydrogen;
a regulator that regulates the temperature of the anode gas in the compressor; and
a controller that controls the regulator to regulate the temperature of the anode gas at an outlet of the anode based on at least one of the pressure of a cathode gas and a current flowing between the anode and the cathode under the application of the voltage.

2. The compressor device according to claim 1, wherein, when the current flowing between the anode and the cathode under the application of the voltage increases, the controller controls the regulator to increase the temperature of the anode gas at the outlet of the anode.

3. The compressor device according to claim 1 or 2, wherein, when the pressure of the cathode gas increases, the controller controls the regulator to increase the temperature of the anode gas at the outlet of the anode.

4. The compressor device according to any one of claims 1 to 3, wherein, when the current flowing between the anode and the cathode under the application of the voltage decreases, the controller controls the regulator to reduce the temperature of the anode gas at the outlet of the anode.

5. The compressor device according to any one of claims 1 to 4, wherein, when the pressure of the cathode gas decreases, the controller controls the regulator to reduce the temperature of the anode gas at the outlet of the anode.

6. The compressor device according to claim 2 or 3, wherein the controller increases an upper limit of the temperature of the anode gas at the outlet of the anode.

7. The compressor device according to claim 4 or 5, wherein the controller reduces an upper limit of the temperature of the anode gas at the outlet of the anode.

8. The compressor device according to claim 2 or 3, wherein the controller controls the regulator to increase the difference between the temperature of the anode gas at the outlet of the anode and the temperature of the anode gas at an inlet of the anode.

9. The compressor device according to claim 8, wherein the controller increases an upper limit of the difference.

10. The compressor device according to claim 4 or 5, wherein the controller controls the regulator to reduce the difference between the temperature of the anode gas at the outlet of the anode and the temperature of the anode gas at an inlet of the anode.

11. The compressor device according to claim 10, wherein the controller reduces an upper limit of the difference.

12. A method for controlling a compressor device, the method comprising the step of causing, by applying a voltage between an anode and a cathode, hydrogen in an anode gas to move through an electrolyte membrane to the cathode and compressing the hydrogen,
wherein, in the step of applying, the temperature of the anode gas at an outlet of the anode is adjusted based on at least one of the pressure of a cathode gas and a current flowing between the anode and the cathode under the application of the voltage.

13. The method according to claim 12, wherein, when the current flowing between the anode and the cathode under the application of the voltage increases, the temperature of the anode gas at the outlet of the anode is increased.

14. The method according to claim 12 or 13, wherein, when the pressure of the cathode gas increases, the temperature of the anode gas at the outlet of the anode is increased.

15. The method according to any one of claims 12 to 14, wherein, when the current flowing between the anode and the cathode under the application of the voltage decreases, the temperature of the anode gas at the outlet of the anode is reduced.

16. The method according to any one of claims 12 to 15, wherein, when the pressure of the cathode gas decreases, the temperature of the anode gas at the outlet of the anode is reduced.
